# FASCICULE DE BREVET EUROPEEN

(11) **EP 1 300 058 B1**
(45) Date de publication et mention de la délivrance du brevet: **18.02.2004**
(21) Numéro de dépôt: 01951784.6
(22) Date de dépôt: 10.07.2001
(51) Int. Cl.: H05H 6/00, H05H 3/06

(54) **DISPOSITIF DE SPALLATION POUR LA PRODUCTION DE NEUTRONS**
SPALLATIONSVORRICHTUNG ZUR NEUTRONENERZEUGUNG
SPALLATION DEVICE FOR PRODUCING NEUTRONS

(30) Priorité: 11.07.2000 FR 0009028
(43) Date de publication de la demande: 09.04.2003
(73) Titulaire: Commissariat A L'Energie Atomique, 75752 Paris (FR)
(72) Inventeur: RITTER, Guillaume, F-13100 Aix en Provence (FR)
(74) Mandataire: Ilgart, Jean-Christophe
(86) Numéro de dépôt international: PCT/FR2001/002215
(87) Numéro de publication internationale: WO 2002/005602

(56) Documents cités:
- WO-A-99/59158
- US-A- 4 119 858
- US-A- 4 122 347
- US-A- 4 293 794
- US-A- 5 160 696
- US-A- 5 811 943
- PATENT ABSTRACTS OF JAPAN vol. 2000, no. 06, 22 septembre 2000 (2000-09-22) & JP 2000 082598 A (JAPAN ATOM ENERGY RES INST;ISHIKAWAJIMA HARIMA HEAVY IND CO LTD), 21 mars 2000 (2000-03-21)

## Description

### DOMAINE TECHNIQUE

La présente invention concerne un dispositif de spallation pour la production de neutrons.

Ce dispositif trouve des applications dans tous les domaines où l'on a besoin d'une source intense de neutrons.

L'invention s'applique notamment à la physique fondamentale, à la médecine et à la transmutation de la matière.

### ETAT DE LA TECHNIQUE ANTERIEURE

On rappelle que la spallation correspond à l'interaction de particules, notamment des protons, qui sont issues d'un accélérateur et ont une énergie élevée, environ égale à 200 MeV ou plus, avec les noyaux d'une cible.

Cette interaction produit des neutrons, par exemple environ 30 neutrons par proton incident de 1 GeV lorsque la cible est du plomb liquide. Environ 80% de ces neutrons proviennent de l'évaporation et le reste provient de cascades intranucléaires. Le spectre de ces neutrons possède un pic vers 3,5 MeV.

Une cible de spallation peut être solide ou, au contraire, liquide. De plus, elle peut être épaisse ou, au contraire, mince.

Une cible de spallation liquide constitue son propre fluide caloporteur. Elle est généralement constituée d'un métal lourd à l'état liquide, choisi par exemple parmi le plomb liquide les eutectiques de ce dernier, le bismuth et le mercure.

Cette cible liquide refroidit elle-même la dernière interface qui la sépare d'une chambre à vide, où circulent les particules destinées à interagir avec cette cible, ou de toute autre région-tampon interposée entre cette chambre à vide et la cible.

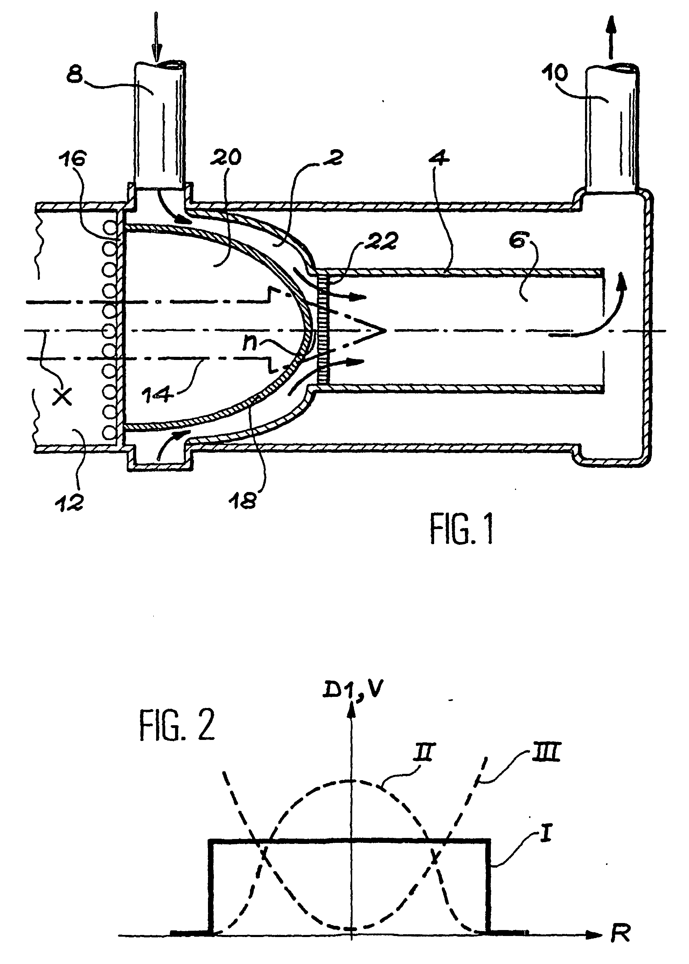

La figure 1 est une vue en coupe longitudinale schématique d'un dispositif de spallation connu, comprenant une cible de spallation 2 en métal lourd liquide. Ce dispositif comprend aussi une enceinte 4 dans laquelle circule la cible de spallation. La référence 6 représente la région de spallation.

On voit aussi une arrivée 8 de fluide caloporteur (cible) froid à une extrémité de cette enceinte 4 et une sortie 10 de fluide caloporteur chaud à l'autre extrémité de l'enceinte.

On voit également une chambre à vide 12 dans laquelle se déplace le faisceau de particules 14, qui est destiné à interagir avec la cible dans la région de spallation 6. Cette chambre à vide est séparée de l'enceinte 4 par une première fenêtre 16 constituant un diaphragme qui est refroidi par une circulation d'eau.

On voit en outre une deuxième fenêtre 18 de forme convexe, dont la convexité est tournée vers l'intérieur de l'enceinte 4. Cette deuxième fenêtre 18 s'étend de la première fenêtre 16 vers l'intérieur de l'enceinte et constitue une paroi étanche délimitant, avec la fenêtre 16, une région-tampon 20, ou région intermédiaire, dans laquelle on a également fait le vide.

Cette deuxième fenêtre 18 constitue une membrane qui est refroidie par la cible de spallation 2.

La forme convexe de cette fenêtre est dictée par la nécessité de guider le fluide entrant par la canalisation d'arrivée 8 vers la région de spallation 6 en limitant au maximum la zone de stagnation n dans laquelle le refroidissement est mal assuré.

on voit également une grille 22 qui est destinée à canaliser l'écoulement de la cible liquide et disposée dans l'enceinte 4, entre la deuxième fenêtre 18 et la région de spallation 6.

Comme on le voit, la cible de spallation et la deuxième fenêtre 18 ont une symétrie de révolution autour d'un axe X suivant lequel se déplace le faisceau de particules 14.

Dans l'exemple représenté, ce faisceau, qui traverse successivement les première et deuxième fenêtres ainsi que la grille 22 avant d'interagir avec la cible liquide dans la région de spallation 6, et l'écoulement de cette cible liquide dans cette région 6 se font dans le même sens.

Considérons maintenant les dispositifs de spallation connus, utilisant des cibles de spallation solides.

Un tel dispositif comprend une fenêtre destinée à confiner la cible solide vis-à-vis des moyens d'accélération du faisceau de particules, la cible proprement dite, destinée à fournir des neutrons par spallation et se présentant par exemple sous la forme de plaques, de cônes, de barreaux, de tubes ou encore de microbilles, et un fluide caloporteur qui est destiné à refroidir la cible de spallation. La nature de chacun de ces organes est déterminée par ses propriétés thermiques, hydrauliques, mécaniques et neutroniques.

Dans le cas d'une cible solide, destinée à fournir des neutrons thermiques, le fluide caloporteur peut-être de l'eau. Cela n'est guère possible lorsque le milieu qui entoure la cible de spallation a un spectre neutronique rapide.

On voit sur la figure 2 les variations de la densité de courant D1 d'un faisceau de particules, utilisé avec une cible de spallation connue, en fonction de la distance R à l'axe de ce faisceau.

Un tel faisceau, dont la densité de courant a une distribution sensiblement en forme de créneau (courbe I) ou de cloche (courbe II), induit de fortes contraintes thermo-mécaniques dans la paroi étanche séparant la cible de spallation du vide où se propage le faisceau, et aussi dans la cible, lorsque celle-ci est solide, en raison d'un gradient de densité de courant élevé.

Ce faisceau de particules possède un pic sur l'axe de symétrie de la cible, dans une zone où le fluide caloporteur ne circule quasiment pas (voir la courbe III de la figure 2 qui est la courbe des variations de la vitesse V du fluide en fonction de R). En conséquence, il existe un point chaud sur la paroi étanche qui limite les performances de la cible de spallation et peut menacer le confinement.

Dans certains dispositifs de spallation, dont fait partie celui qui est représenté sur la figure 1, l'existence, sur l'axe du faisceau de particules, de cette zone où le fluide caloporteur ne circule quasiment pas, conduit à mettre en place la grille 22 qui subit de face l'irradiation du faisceau et permet de canaliser l'écoulement de manière à limiter l'extension de cette zone où la vitesse d'écoulement du fluide caloporteur est trop faible.

Cette grille, comme tous les éléments placés dans l'axe du faisceau, est soumise à l'irradiation de ce faisceau et ses performances mécaniques et thermiques se dégradent au cours du temps. Or, cette grille ne contribue pas à la spallation et son volume est tel qu'en cas d'endommagement, cette grille risque à son tour d'endommager voire de détruire la cible de spallation, en particulier par obturation partielle ou totale des circuits du fluide caloporteur.

Le refroidissement, par circulation d'eau à haut débit dans la membrane 16 généralement en acier, permet de remédier à l'échauffement- résultant du passage du faisceau.

Dans une cible soumise à un faisceau intense, la présence d'un matériau lourd juste derrière la fenêtre 18 conduit à l'absorption, par cette dernière, d'une partie de l'énergie du faisceau. Cela se produit systématiquement avec les cibles liquides.

Le refroidissement de la fenêtre 18 ne peut avoir lieu que sur une face de celle-ci et il est nécessaire de refroidir cette fenêtre (ou d'ailleurs toute autre fenêtre) par la cible liquide elle-même.

Si le faisceau de particules présente un pic de densité de courant au point où la vitesse de la cible constituant le fluide caloporteur est minimale, on obtient un point chaud.

indiquons en outre que l'on connaît déjà des dispositifs de spallation par les documents [1] et [2] qui, comme les autres documents mentionnés par la suite, sont mentionnés à la fin de la présente description.

### EXPOSÉ DE L'INVENTION

La présente invention a pour but de remédier aux inconvénients mentionnés plus haut des dispositifs de spallation connus et, plus précisément, de minimiser les contraintes thermo-mécaniques qui s'exercent sur les composants-clés de ces dispositifs, notamment la paroi étanche séparant la cible de spallation d'une enceinte dans laquelle on a fait le vide et qui est traversée par le faisceau de particules avant que celui-ci ne parvienne à la cible.

De façon précise, la présente invention a pour objet un dispositif de spallation pour la production de neutrons, ce dispositif comprenant:
- une cible de spallation destinée à produire les neutrons par interaction avec un faisceau de particules,
- une première enceinte contenant la cible de spallation,
- des moyens de génération du faisceau de particules,
- une deuxième enceinte dans laquelle le faisceau de particules est destiné à se propager en direction de la cible de spallation, suivant un axe de propagation (ce qui nécessite, bien entendu, l'établissement d'une basse pression, inférieure à 10⁻⁸ Pa dans cette deuxième enceinte),
- une paroi étanche qui est apte à laisser passer le faisceau de particules, sépare la première enceinte de la deuxième enceinte et rencontre cet axe de propagation, et
- un fluide caloporteur destiné à circuler dans la première enceinte pour refroidir la cible de spallation,
ce dispositif étant caractérisé en ce que le faisceau de particules est creux et entoure l'axe de propagation.

De préférence, les particules sont choisies dans le groupe comprenant les protons, les noyaux de deutérium, les noyaux de tritium, les noyaux d'hélium 3 et les noyaux d'hélium 4.

Selon un mode de réalisation préféré du dispositif objet de l'invention, la distribution radiale de la densité de courant dans le faisceau de particules, dans le demi-plan transversal délimité par l'axe de propagation, est sensiblement gaussienne et centrée hors de l'axe de symétrie du faisceau. Cette disposition est caractérisée par un minimum de densité de courant sur l'axe du faisceau.

Une telle distribution de densité de courant dans le faisceau permet de minimiser les concentrations de contrainte mécanique.

Selon un premier mode de réalisation particulier du dispositif objet de l'invention, les moyens de génération sont prévus pour produire directement, c'est-à-dire eux-mêmes, le faisceau de particules creux.

Selon un deuxième mode de réalisation particulier, les moyens de génération sont prévus pour produire le faisceau de particules creux à partir d'un faisceau de particules plein.

Dans la présente invention, la cible de spallation peut être solide.

Dans ce cas, selon un mode de réalisation préféré de l'invention, la cible de spallation comprend une pluralité de cibles élémentaires successives, chaque cible élémentaire comprenant une plaque conique pourvue d'un perçage central.

De telles cibles élémentaires ont une forme bien adaptée au faisceau creux et à l'écoulement du fluide caloporteur.

De préférence, dans le cas où cette cible de spallation est solide, un espace est prévu entre la paroi étanche et la cible de spallation pour la circulation du fluide caloporteur.

Dans la présente invention, il est au contraire possible d'utiliser une cible de spallation liquide, cette cible constituant alors également le fluide caloporteur.

Dans ce cas, selon un premier mode de réalisation particulier de l'invention, la cible de spallation se déplace, dans la première enceinte, suivant l'axe de propagation et dans le sens de propagation du faisceau de particules.

Dans ce cas où la cible de spallation est liquide, selon un deuxième mode de réalisation particulier, la cible de spallation se déplace, dans la première enceinte, suivant l'axe de propagation et dans le sens opposé à celui de la propagation du faisceau de particules.

Selon un mode de réalisation préféré de la présente invention, la cible de spallation a un axe de symétrie de révolution qui est confondu avec l'axe de propagation.

De préférence, la paroi étanche est convexe et sa convexité est tournée vers l'intérieur de la première enceinte.

Dans la présente invention, la paroi étanche a de préférence un axe de symétrie de révolution qui est confondu avec l'axe de propagation.

De préférence, le dispositif objet de l'invention comprend en outre dans la première enceinte, des moyens de guidage du fluide caloporteur au moins en direction de la paroi étanche.

### BRÈVE DESCRIPTION DES DESSINS

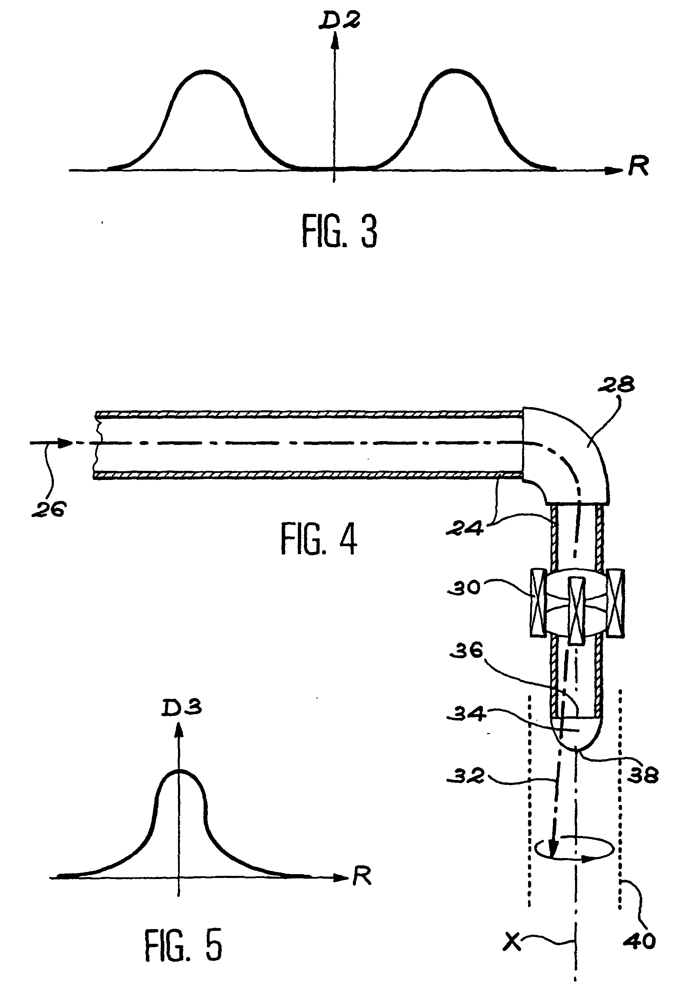

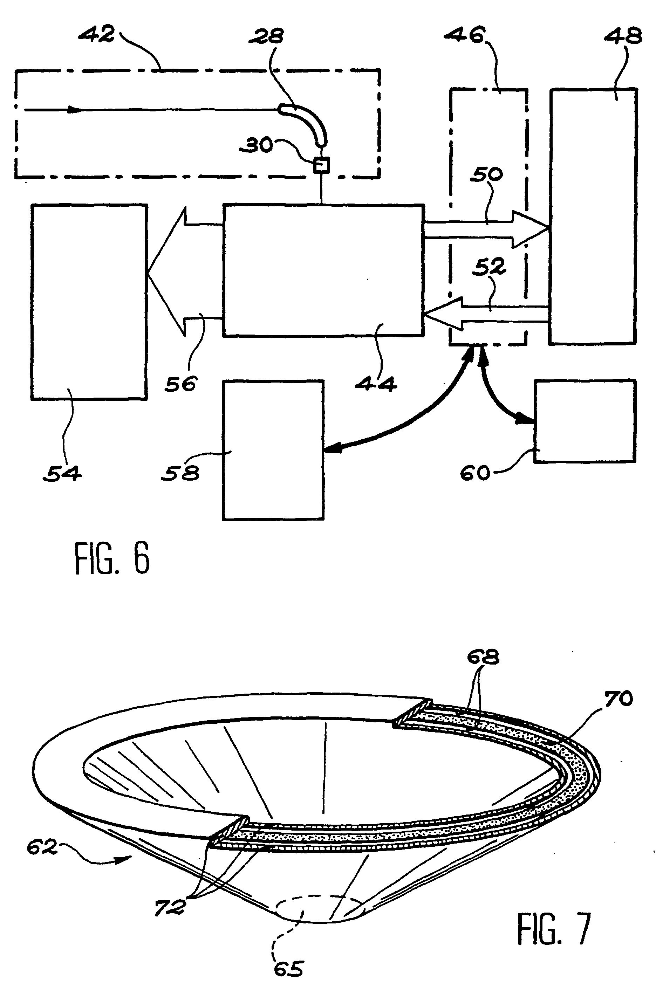

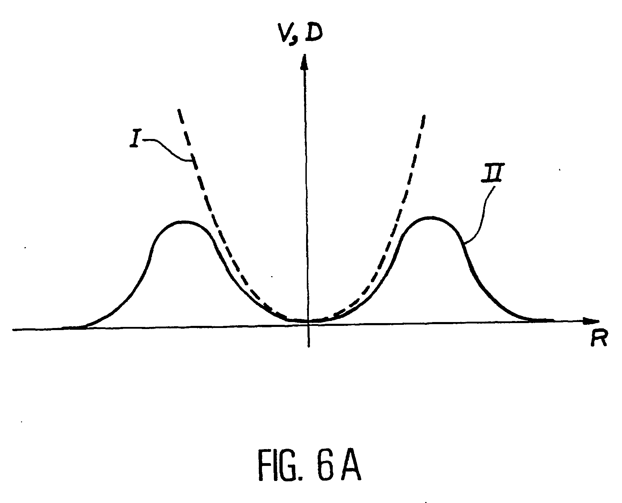

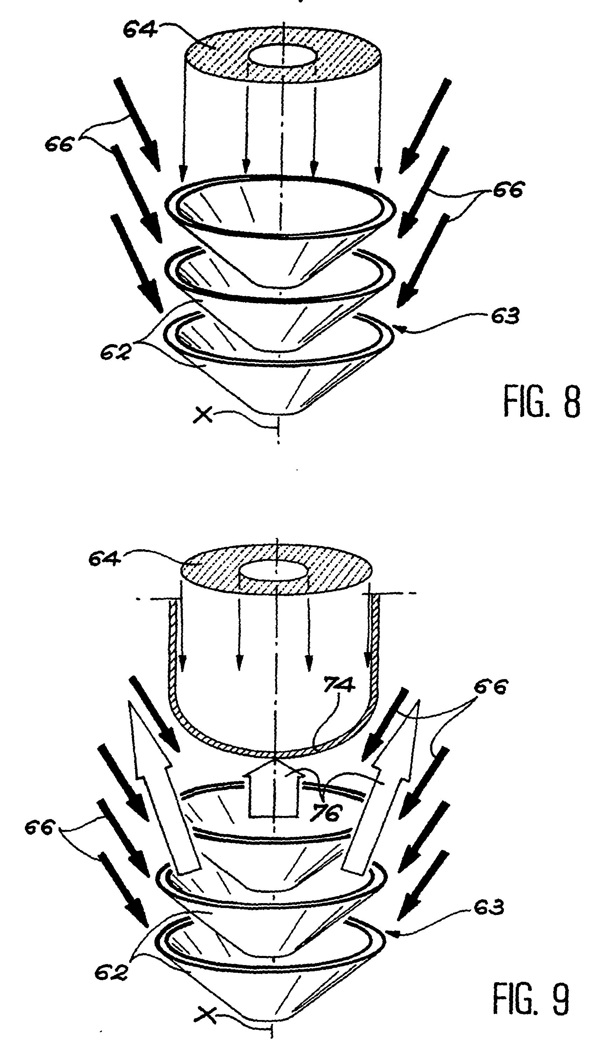

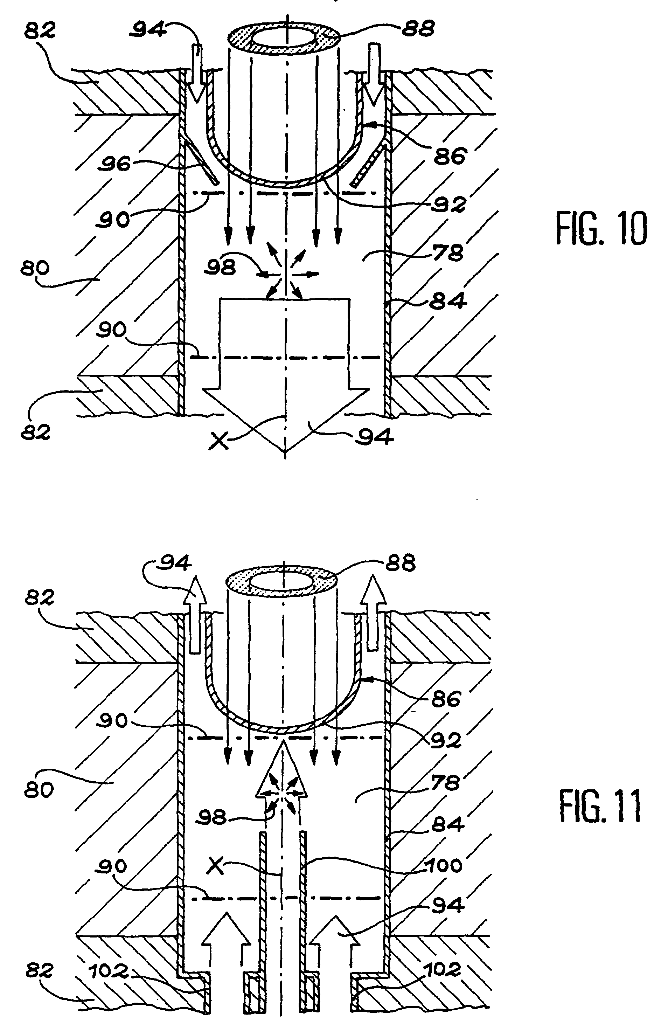

La présente invention sera mieux comprise à la lecture de la description d'exemples de réalisation donnés ci-après, à titre purement indicatif et nullement limitatif, en faisant référence aux dessins annexés sur lesquels :
■ la figure 1 est une vue en coupe longitudinale schématique d'un dispositif de spallation connu et a déjà été décrite,
■ la figure 2 illustre schématiquement la distribution radiale de la densité de courant dans un faisceau de particules qui est utilisé dans un dispositif de spallation connu,
■ la figure 3 illustre schématiquement la distribution radiale de la densité de courant dans un faisceau de particules qui est utilisable dans la présente invention,
■ la figure 4 est une vue schématique d'un dispositif de balayage permettant d'obtenir un faisceau creux utilisable dans l'invention,
■ la figure 5 illustre schématiquement la distribution radiale de la densité de courant dans un faisceau de particules qui arrive à ce dispositif de balayage,
■ la figure 6 est une vue schématique de divers systèmes d'une installation de spallation,
■ la figure 6A illustre schématiquement la possibilité d'obtenir deux configurations différentes pour l'écoulement du fluide caloporteur et le faisceau de particules dans un dispositif conforme à l'invention ayant une symétrie de révolution autour de l'axe du faisceau de particules incident,
■ la figure 7 est une vue partiellement en coupe transversale d'une plaque conique utilisable, dans l'invention, en tant que cible élémentaire de spallation,
■ la figure 8 illustre schématiquement une cible de spallation utilisable dans l'invention et formée d'un empilement de telles cibles élémentaires,
■ la figure 9 montre l'interposition d'une partie du fluide caloporteur entre la cible de la figure 8 et la paroi étanche qui sépare cette cible d'une chambre à vide par où arrive le faisceau de particules, et
■ les figures 10 à 12 sont des vues schématiques de modes de réalisation particuliers du dispositif de spallation objet de l'invention.

### EXPOSÉ DÉTAILLÉ DE MODES DE RÉALISATION PARTICULIERS

Dans les exemples de l'invention qui suivent, on utilise un faisceau creux de particules, également appelé « faisceau annulaire de particules », dont la distribution radiale de densité de courant est sensiblement gaussienne. On a schématiquement illustré cela sur la figure 3 où les variations de cette densité D2 sont représentées en fonction de la distance R à l'axe du faisceau creux.

Cela permet de résoudre les deux problèmes suivants :
- limiter le gradient de densité de courant pour éviter des contraintes mécaniques internes excessives dans les composants-clés du dispositif de spallation, en particulier la paroi étanche, ainsi que la cible de spallation s'il s'agit d'une cible solide, et
- écarter le pic de puissance de l'axe de symétrie de la cible pour éviter les problèmes de refroidissement.

On peut obtenir une distribution annulaire de densité de courant dans le faisceau de particules en utilisant des moyens d'optiques magnétiques que l'on place en amont de la paroi étanche.

La figure 4 illustre schématiquement la génération d'un faisceau creux de particules. On voit sur cette figure 4 une chambre à vide 24 qui prolonge un accélérateur de particules non représenté, destiné à former un faisceau de particules plein 26 et à accélérer ce faisceau. Cette chambre à vide (qui est munie de moyens non représentés, permettant d'y faire le vide) fait un coude où se trouve un aimant de courbure 28. A la suite de cet aimant de courbure, un système magnétique 30 est prévu pour réaliser un balayage rotatif à haute fréquence, permettant d'obtenir, à partir du faisceau plein 26, un faisceau de particules creux 32 dont l'axe est noté X.

La chambre à vide 24 se termine par une paroi étanche convexe 38.

Cette dernière se trouve en aval d'une éventuelle paroi-tampon 36 (délimitant alors, avec la paroi 38, une zone référencée 34 sur la figure 4) et à l'intérieur d'une enceinte 40 contenant une cible de spallation.

L'épaisseur et le matériau constitutif de chacune des parois 36 et 38 sont bien entendu choisies pour que le faisceau 32 puisse traverser ces parois.

On a représenté sur la figure 5 les variations de la densité de courant D3 dans le faisceau de particules plein 26 en fonction de la distance R à l'axe de ce faisceau, à la sortie de l'aimant de courbure 28. On voit que le faisceau 26 est sensiblement gaussien.

Après le système de balayage 30, et en particulier dans la cible de spallation, le faisceau de particules devient creux, la distribution de densité de courant de ce faisceau creux étant représentée sur la figure 3.

Le système magnétique 30, qui est placé en amont de la paroi étanche 38, se trouve sur la trajectoire des particules de haute énergie, qui sont rétrodiffusées (« backscattered ») par la cible de spallation. C'est pourquoi ce système est de préférence composé de matériaux peu sensibles à l'irradiation et à l'activation. L'aimant de courbure 28 protège l'accélérateur de particules contre ces particules rétrodiffusées de haute énergie.

Il convient de noter qu'il est possible de réaliser d'autres dispositifs conforme à l'invention, ne comportant aucun aimant de courbure. On utilise alors une chambre à vide qui est sensiblement rectiligne en amont du système magnétique de balayage 30.

Le balayage, que le système 30 permet d'obtenir, satisfait de préférence aux exigences mentionnées dans le document [3].

Dans un autre exemple au lieu de former le faisceau de particules creux à partir d'un faisceau plein accéléré, on forme un tel faisceau creux à partir de la source de particules et l'on accélère ensuite ce faisceau creux. A ce sujet, on consultera le document [4].

Indiquons dès maintenant qu'il est possible de prévoir des moyens de guidage, par exemple des ailettes, dans l'enceinte 40, pour canaliser le refroidissement sur la paroi étanche 38, afin d'éviter un renouvellement trop fréquent de cette paroi 38.

De plus, dans un dispositif conforme à l'invention, il est préférable que le refroidissement de la cible de spallation soit assuré par une convexion forcée, que la cible soit solide ou liquide.

En outre, dans un dispositif conforme à l'invention, l'arrivée du faisceau de particules creux dans la cible de spallation peut se faire sous un angle quelconque, par le haut ou par le bas et d'une façon oblique ou horizontale.

La figure 6 illustre schématiquement plusieurs systèmes dont l'ensemble forme un exemple d'installation de spallation utilisant l'invention.

Cette installation comprend :
- un système 42 qui fournit le faisceau de particules creux et qui comprend l'aimant de courbure 28 et le système de balayage 30 de la figure 4,
- un dispositif de spallation 44 conforme à l'invention, qui reçoit le faisceau creux,
- un système 46 comprenant des circuits de transport de fluide caloporteur,
- un système échangeur de chaleur 48 qui reçoit le fluide caloporteur chaud 50 provenant du dispositif 44 et fournit à ce dernier le fluide caloporteur froid 52 par l'intermédiaire du système 46,
- un système de couverture utile 54 comprenant des dispositifs d'irradiation ou du combustible nucléaire et/ou des isotopes à transmuter et recevant les neutrons 56 produits par le dispositif de spallation,
- un système 58 d'épuration des circuits et de traitement des effluents radioactifs qui est relié au système 46 des circuits de transport de fluide caloporteur, et
- un système 60 de vidange de ces circuits.

Ce système de vidange 60 est utile pour les opérations de démarrage, d'arrêt et de maintenance de l'installation et aussi lors d'accidents ou d'incidents dans cette installation.

Le système 58 permet d'extraire de l'installation les espèces indésirables telles que les contaminants radioactifs lourds et les gaz radioactifs, en particulier le tritium.

Dans un dispositif conforme à l'invention, les particules accélérées sont de préférence des particules (chargées) légères comme les protons, les deutons, les tritons, les noyaux d'hélium 3 et les noyaux d'hélium 4.

on utilise par exemple des protons dont l'énergie Ep vaut approximativement 600 MeV pour satisfaire à un compromis entre le rendement neutronique de la spallation, l'endommagement subi par la paroi étanche et par les autres structures de la cible, l'activation de l'accélérateur par les particules perdues en raison de phénomènes de charge d'espace et l'activation du dispositif de spallation y compris les protections biologiques et la terre.

En fonction de la configuration, il est possible d'ajuster cette énergie Ep dans une gamme allant de 200 MeV à plusieurs GeV.

L'intensité du faisceau fourni par l'accélérateur est déterminée par les besoins des utilisateurs du dispositif de spallation, en termes de neutrons de spallation, et varie par exemple entre 0,5 mA et plusieurs centaines de mA.

Dans un dispositif conforme à l'invention ayant une symétrie de révolution autour de l'axe du faisceau de particules incident, il est ainsi possible d'obtenir deux configurations différentes pour l'écoulement du fluide caloporteur et le faisceau de particules (comme l'indique la figure 6A où la courbe I correspond à la vitesse V du fluide et la courbe II à la densité D du courant du faisceau), grâce à l'utilisation d'un faisceau de particules annulaire, tout en conservant cette symétrie de révolution du dispositif autour de l'axe du faisceau.

De plus, dans un dispositif conforme à l'invention, utilisant une cible de spallation solide, il est possible de séparer le refroidissement de la paroi étanche du refroidissement de la cible, dans laquelle on dispose de plus de degrés de liberté pour canaliser le fluide caloporteur.

Dans l'invention, pour former une cible de spallation solide, il est avantageux d'utiliser des plaques coniques dont un exemple est schématiquement illustré sur la figure 7.

Chaque plaque 62 a, en son centre, un évidement 65 permettant au fluide caloporteur d'évacuer la chaleur engendrée dans cette plaque.

On forme une cible de spallation 63 en disposant une pluralité de telles plaques 62 à la suite les unes des autres et de façon que l'ensemble 63 obtenu ait une symétrie de révolution autour de l'axe X du faisceau de particules creux 64, comme le montrent les figures 8 et 9.

Les plaques 62 sont disposées les unes à la suite des autres de manière que l'angle solide aperçu par une partie éclairée d'une plaque vers la région où les neutrons de source (« source neutrons ») sont utilisés et vers la paroi 74 de la figure 9 (neutrons rétrodiffusés) soit occupé par une portion de plaque non éclairée et réciproquement.

Ainsi le spectre de la source est-il dégradé dans cette partie de la cible avant d'atteindre la région utile, ce qui permet de limiter les dommages aux matériaux de structure dans la mesure où ces dommages sont dus aux neutrons les plus énergétiques.

De plus, la quantité de neutrons rétrodiffusés est minimisée, ce qui permet d'augmenter la durée de vie de la paroi 74 (figure 9) et de limiter les dommages infligés aux structures de l'accélérateur précédant la cible.

On précise que sur la figure 8, les flèches 66 représentent le fluide caloporteur.

En revenant à la figure 7, on voit que les plaques sont gainées et que l'on prévoit un espace vide 68 entre une cible de spallation élémentaire, constituée d'une plaque conique 70 par exemple en tungstène, et le gainage 72 de cette cible élémentaire, gainage par exemple en acier ou alliage d'aluminium, afin d'autoriser la dilatation de la cible élémentaire lors de son utilisation.

On précise de plus que l'épaisseur des plaques 70 varie d'une plaque à l'autre de manière à aplanir la distribution axiale de la source de neutrons.

Avec une cible solide du genre de celle de la figure 8, les problèmes liés à la corrosion résultent du fluide caloporteur. Or, pour une cible de spallation solide, on utilise de préférence de l'eau en tant que fluide caloporteur, dans le cas d'une couverture où les neutrons thermiques sont nécessaires, ou du sodium liquide dans le cas où l'on ne veut pas de neutrons thermiques. Les technologies associées à de tels fluides sont maîtrisées.

Les réactions de spallation sur les liquides caloporteurs sont gênantes car elles réduisent le rendement neutronique de l'installation et contribuent à l'activation générale ou localisée - par des redépôts - des circuits.

Cependant, les technologies de purification des circuits contaminés en espèces non désirées sont connues tant pour le sodium que pour l'eau.

De plus, les gaz caloporteurs comme le dioxyde de carbone ou l'hélium ne réagissent quasiment pas avec les particules incidentes du fait de la faible densité de ces gaz, ce qui améliore le rendement sans être gênant pour le fonctionnement d'ensemble de l'installation.

Aussi une cible de spallation solide présente-t-elle l'avantage de confiner la radioactivité au niveau de cette cible (qui est gainée) et des systèmes de purification des circuits. L'agencement spatial des éléments de cible solide est compatible avec le système de manutention prévu pour ces éléments.

Les cibles de spallation liquides sont de préférence composées de matériaux dont la masse atomique est élevée et qui sont soit purs soit sous forme d'eutectiques de manière à être liquides à des températures compatibles avec la tenue mécanique et chimique des matériaux de structure qui composent la cible et les circuits associés.

On utilise par exemple le mercure, le plomb et les eutectiques de ce dernier. L'avantage principal d'un eutectique tel que le plomb-bismuth avec 45% de plomb en masse et 55% de bismuth en masse, hormis sa faible température de fusion, est de ne pas changer de densité lors de son changement de phase. En général, on préfère ne pas avoir de bismuth en raison de la forte activabilité de ce dernier en polonium 210 et autres isotopes radioactifs à vie longue.

Les sections efficaces (« cross sections ») de réactions inélastiques du plomb (n, xn), notamment la réaction (n,2n) pour une énergie de neutron supérieure à 6,22 MeV, permettent de maximiser le rendement de la source.

On évite d'utiliser le mercure dans certains dispositifs à cause de sa très forte corrosivité physique. En effet, à température ambiante, le mercure statique dissout environ 1 mm d'acier par an.

Le plomb et ses alliages sont également corrosifs pour les aciers, ce qui peut conduire à préférer les cibles solides gainées. L'usage de plomb liquide pur ou allié, en limitant les effets de la corrosion, est rendu possible grâce au contrôle de la concentration en oxygène dans le plomb liquide. Les conditions de fonctionnement définissent un intervalle de concentration en oxygène au-dessus duquel le plomb et les impuretés s'oxydent et précipitent et en-dessous duquel le plomb corrode l'acier. Ce dernier est alors dissous dans le circuit et risque de se déposer dans des zones froides ou dans des zones où la vitesse du fluide caloporteur est faible. De tels dépôts risquent de boucher les circuits.

Dans l'absolu, on utilise, dans l'invention, des matériaux qui sont transparents aux neutrons dans le spectre principal de la cible. Ainsi le plomb pur ou allié peut-il convenir pour des cibles à spectre rapide ou thermique même si certains isotopes naturellement présents pourraient mériter d'être extraits par séparation isotopique en raison de leur importante section efficace neutronique de capture.

Le mercure et le tungstène sont mieux adaptés aux cibles à spectres essentiellement rapides dans la mesure où, dans le domaine thermique, ces deux éléments sont plutôt aptes à capturer les neutrons.

Dans l'invention, la cible de spallation (qui contient la région de spallation) est confinée et ne laisse passer que les neutrons de source.

Les structures que comprend cette cible sont transparentes aux neutrons et assurent, dans une situation nominale ou dégradée, le confinement le plus complet des matières. Tout système d'isolement mécanique de la région de spallation définit ainsi la cible.

Les protections biologiques du public et du personnel d'exploitation du dispositif de spallation sont dimensionnées en conformité avec la réglementation en vigueur.

Les particules accélérées sont arrêtées par la cible de spallation de manière à maximiser le rendement.

Les protections neutroniques, dont est pourvu un dispositif conforme à l'invention, remédient également aux problèmes de protection contre les particules chargées.

La position de la cible de spallation dans son système d'accueil (par exemple le coeur d'un réacteur nucléaire de puissance ou de transmutation, le modérateur d'un réacteur nucléaire ou un réseau d'éléments aptes à engendrer du tritium) est déterminée de préférence en maximisant le coefficient de pondération (« weighting factor ») ϕ^{*} qui est défini dans le document [5].

Considérons maintenant les avantages apportés par l'invention.

L'utilisation d'une cible de spallation avec un faisceau annulaire de particules permet d'évacuer, de manière simple (sans géométrie compliquée et sans avoir besoin de la grille 22 de la figure 1, grille qui est exposée à l'irradiation par le faisceau) et efficace, la chaleur engendrée dans la paroi étanche, ou fenêtre, qui sépare la cible de spallation de la zone sous vide la plus proche de cette cible de spallation.

Il est également possible de faire fonctionner un dispositif conforme à l'invention avec un écoulement fuyant ou un écoulement frontal du fluide caloporteur, sans utiliser, pour le refroidissement des composants sensibles du dispositif, un flux de fluide caloporteur chaud. Pour cela, il suffit de faire arriver le fluide caloporteur par une région non touchée par la spallation.

Ces avantages concernent essentiellement la paroi étanche qui est l'organe le plus sollicité du dispositif. En effet, cette paroi étanche doit supporter une très basse pression, généralement de l'ordre de 10⁻⁹ Pa, du côté par où arrive le faisceau de particules, et la pression du fluide caloporteur de l'autre côté. Cette dernière pression est très élevée, généralement supérieure à 5×10⁶ Pa, lorsque ce fluide est de l'eau ou un gaz, et de l'ordre de 10⁵ Pa lorsque le fluide caloporteur est un métal liquide.

De plus, l'interposition d'une couche de fluide caloporteur entre la paroi étanche et la cible de spallation permet de réduire la proportion de neutrons rétrodiffusés (« backscattered ») au voisinage de cette paroi étanche. Cela résulte d'un effet d'angle solide et du fait que le fluide caloporteur diffuse les neutrons.

La figure 9 est une vue en coupe longitudinale schématique, montrant la paroi étanche ou fenêtre 74, qui est suivie par un ensemble 63 de lames coniques 62 à perçage central, ces lames étant alignées suivant l'axe X du dispositif (axe de propagation du faisceau de particules).

La couche de fluide caloporteur qui circule entre la paroi étanche 74 et la plaque conique 62 la plus proche de cette paroi étanche est symbolisée par les deux flèches 66 les plus proches de cette paroi. Les flèches 76 représentent les neutrons rétrodiffusés, la 'disposition des lames 62 permettant de diminuer la quantité de ces neutrons vers l'axe du faisceau dans la direction de la paroi 74. On voit aussi sur la figure 9 le faisceau de particules incident 64.

La figure 10 est une vue en coupe longitudinale schématique d'un mode de réalisation particulier du dispositif de spallation objet de l'invention.

Dans cet exemple, le dispositif fait partie d'un réacteur hybride pour la transmutation ou la production d'énergie, la cible de spallation 78 est en métal liquide et constitue le fluide caloporteur, et l'écoulement de ce fluide est fuyant.

On voit le coeur 80 (partie fissile) du réacteur dans lequel on a installé le dispositif. De part et d'autre du coeur 80 se trouve le plénum 82.

On voit aussi l'enceinte 84, dans laquelle on fait circuler la cible de spallation 78, et une extrémité de la chambre à vide 86 dans laquelle se propage le faisceau de particules creux 88 en direction de la zone de spallation. Cette zone est délimitée, dans l'enceinte 84, par les traits mixtes 90.

L'extrémité de la chambre à vide 86 est formée par la paroi étanche 92 de forme convexe et par exemple en acier, dont la convexité est tournée vers l'intérieur de l'enceinte 84 et qui laisse passer le faisceau 88.

La paroi 92 a une forme sensiblement hémisphérique pour éviter les concentrations de contraintes mécaniques.

Les moyens de génération du faisceau creux 88 ne sont pas représentés. A ce propos, on se reportera à la description de la figure 4.

Les flèches 94 symbolisent la circulation de la cible liquide en métal. Cette circulation a lieu suivant l'axe X de propagation du faisceau et dans le sens de propagation de ce dernier.

Cet axe X constitue l'axe de symétrie de révolution de l'enceinte 84 et de la paroi étanche 92.

On voit aussi des ailettes 96 qui sont fixées à la paroi interne de l'enceinte 84, au voisinage de la paroi étanche 92. Ces ailettes sont suffisamment espacées l'une de l'autre pour permettre le passage du faisceau de particules 64 sans interagir avec ce dernier. Ces ailettes constituent un guide d'écoulement pour la cible liquide et donc pour le fluide caloporteur.

Ce guide d'écoulement permet d'améliorer la turbulence et donc les échanges thermiques au niveau de la paroi étanche 92.

Les flèches 98 de la figure 10 symbolisent les neutrons engendrés dans la zone de spallation.

Le démarrage de l'installation comprenant le dispositif de la figure 10 est progressif. On amène d'abord le fluide caloporteur à la température de fonctionnement par paliers successifs dans un réservoir de stockage (non représenté) puis on introduit ce fluide caloporteur dans des circuits (non représentés) prévus pour sa circulation. Des pompes (non représentées) sont alors mises en oeuvre et le font circuler. On démarre alors l'accélérateur de particules (non représenté) à très faible intensité et l'on monte en puissance de manière à minimiser les contraintes sur les diverses structures de l'installation.

Pour l'arrêt, on procède en sens inverse du démarrage.

L'activation du fluide caloporteur liquide et la puissance résiduelle induite empêchant le gel du fluide caloporteur. Quelle que soit la configuration, le dispositif de spallation est dimensionné de manière que la puissance résiduelle, après un arrêt prévu ou accidentel, soit évacuée par des moyens passifs comme la convection naturelle.

L'intensité de l'accélérateur est déterminée, une fois la montée en puissance terminée, par les besoins de l'utilisation des neutrons.

Dans le cas d'un réacteur de puissance électrogène ou destiné à la transmutation, ce sont la réactivité et la puissance (mesurées à partir de données sur les températures d'entrée et de sortie du fluide caloporteur et les informations du système de contrôle neutronique) qui fixent l'intensité du faisceau.

Dans le cas d'une source de neutrons destinée à des recherches de physique fondamentale ou à des tests technologiques c'est la puissance extraite de la cible de spallation qui est déterminante.

La figure 11 est une vue en coupe longitudinale schématique d'un autre mode de réalisation particulier du dispositif objet de l'invention, utilisant encore une cible de spallation en métal liquide mais un écoulement frontal, au lieu d'un écoulement fuyant, pour cette cible liquide et donc pour le fluide caloporteur.

Cet écoulement a donc lieu en sens opposé à la propagation du faisceau de particules 88.

Le dispositif de la figure 11 est identique au dispositif de la figure 10 excepté que les ailettes 96 sont supprimées et qu'à l'extrémité de l'enceinte 84, extrémité opposée à celle où se trouve la paroi 92, le dispositif comprend un guide d'écoulement principal tubulaire 100, dont l'axe est l'axe de symétrie de révolution du dispositif (confondu avec l'axe de propagation X du faisceau de particules 88), et des ouvertures 102 de part et d'autre de ce guide d'écoulement principal.

Le diamètre intérieur du faisceau de particules est supérieur au diamètre extérieur de ce guide d'écoulement principal.

La cible de spallation liquide (fluide caloporteur) arrive dans l'enceinte 84 par le guide d'écoulement 100 et les ouvertures 102.

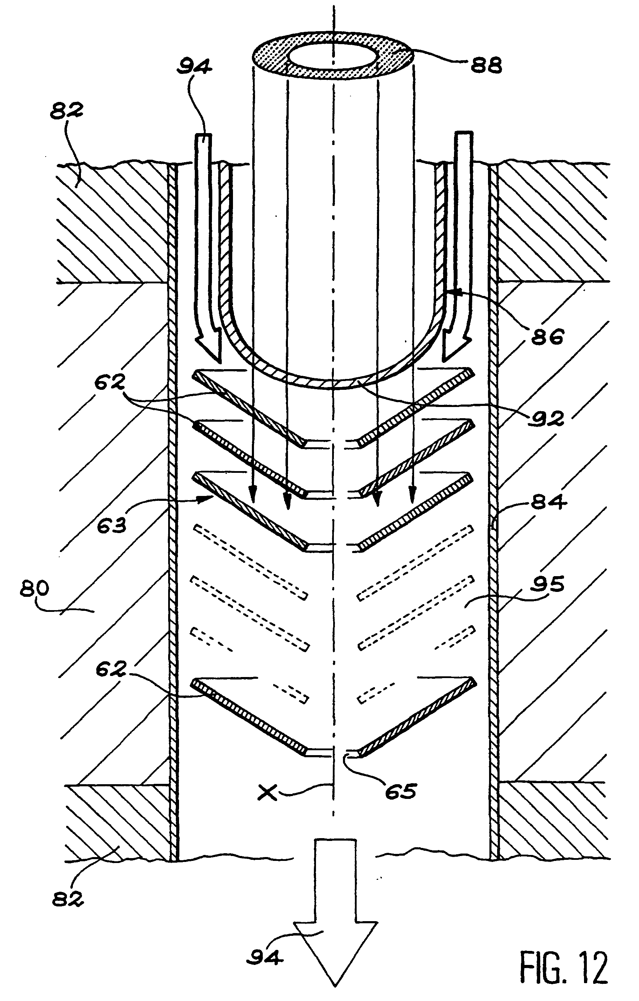

La figure 12 est une vue en coupe longitudinale schématique d'un autre mode de réalisation particulier du dispositif objet de l'invention.

Ce dispositif est identique au dispositif de la figure 10 excepté qu'il ne comporte pas les ailettes 96 et que la cible de spallation y est solide.

Dans l'exemple de la figure 12, l'écoulement du fluide caloporteur 95, symbolisé par les flèches 94, a encore lieu dans le même sens que la propagation du faisceau de particules 88.

La cible de spallation 63 comprend plusieurs cibles élémentaires coniques 62 à perçage central, du genre de la cible de la figure 7. Ces cibles 62 sont identiques les unes aux autres et disposées les unes à la suite des autres dans l'enceinte 84, suivant l'axe X de propagation du faisceau qui est aussi l'axe de symétrie de révolution de la cible de spallation et de la paroi étanche 92.

Le diamètre commun aux perçages 65 est inférieur au diamètre intérieur du faisceau 88 mais les cibles 62 ont un plus grand diamètre commun qui est supérieur au diamètre extérieur du faisceau 88.

Des moyens non représentés sont prévus pour fixer.chaque cible élémentaire 62 à la paroi interne de l'enceinte 84.

Le fluide caloporteur 95 circule autour de la paroi étanche 92, entre cette dernière et la cible élémentaire 62 la plus proche de cette paroi étanche, et entre les autres cibles élémentaires 62.

Du fait de leur forme conique, toutes ces cibles élémentaires permettent aussi de guider l'écoulement du fluide caloporteur.

La région de spallation, délimitée par les lignes 90 sur les figures 10 et 11 et par les cibles élémentaires d'extrémité dans le cas de la figure 12, est avantageusement disposée de manière à maximiser le rendement neutronique du dispositif de spallation.

Dans le cas des dispositifs des figures 10 à 12, on peut prévoir une pompe mécanique ou magnétique pour obtenir la convection forcée du fluide caloporteur.

Les documents cités dans la présente description sont les suivants :
[1] US 5,160,696 (C.D. Bowman)
[2] US 5,774,514 (C. Rubbia)
[3] J.M. Lagniel, The various parts of the accelerator - From the proton source to the 1GeV beam, GEDEON Workshop "Which accelerator for which DEMO ?", pp. 1-24, Aix-en Provence (France), November 25-26, 1999
[4] US 5,811,943 (A. Mishin et al.)
[5] M. Salvatores et al., Nuclear science and engineering, 126, pp. 333-340 (1997).

## Revendications

1. Dispositif de spallation pour la production de neutrons, ce dispositif comprenant:
- une cible de spallation (63, 78) destinée à produire les neutrons par interaction avec un faisceau de particules (64, 88),
- une première enceinte (84) contenant la cible de spallation,
- des moyens (30) de génération du faisceau de particules,
- une deuxième enceinte (86) dans laquelle le faisceau de particules est destiné à se propager en direction de la cible de spallation, suivant un axe de propagation (X),
- une paroi étanche (74, 92) qui est apte à laisser passer le faisceau de particules, sépare la première enceinte de la deuxième enceinte et rencontre cet axe de propagation, et
- un fluide caloporteur (78, 95) destiné à circuler dans la première enceinte pour refroidir la cible de spallation,
ce dispositif étant **caractérisé en ce que** le faisceau de particules (64, 88) est creux et entoure l'axe de propagation (X).

2. Dispositif selon la revendication 1, dans lequel les particules sont choisies dans le groupe comprenant les protons, les noyaux de deutérium, les noyaux de tritium, les noyaux d'hélium 3 et les noyaux d'hélium 4.

3. Dispositif selon l'une quelconque des revendications 1 et 2, dans lequel la distribution radiale de la densité de courant dans le faisceau de particules est sensiblement gaussienne et centrée hors de l'axe de symétrie du faisceau.

4. Dispositif selon l'une quelconque des revendications 1 à 3, dans lequel les moyens de génération sont prévus pour produire eux-mêmes le faisceau de particules creux.

5. Dispositif selon l'une quelconque des revendications 1 à 3, dans lequel les moyens de génération (30) sont prévus pour produire le faisceau de particules creux à partir d'un faisceau de particules plein (26).

6. Dispositif selon l'une quelconque des revendications 1 à 5, dans lequel la cible de spallation (63) est solide.

7. Dispositif selon la revendication 6, dans lequel la cible de spallation (63) comprend une pluralité de cibles élémentaires successives (62), chaque cible élémentaire comprenant une plaque conique pourvue d'un perçage central (65).

8. Dispositif selon l'une quelconque des revendications 6 et 7, dans lequel un espace est prévu entre la paroi étanche (92) et la cible de spallation (63) pour la circulation du fluide caloporteur (95).

9. Dispositif selon l'une quelconque des revendications 1 à 5, dans lequel la cible de spallation (78) est liquide et constitue le fluide caloporteur.

10. Dispositif selon la revendication 9, dans lequel la cible de spallation (78) se déplace, dans la première enceinte, suivant l'axe de propagation (X) et dans le sens de propagation du faisceau de particules (88).

11. Dispositif selon la revendication 9, dans lequel la cible de spallation (78) se déplace, dans la première enceinte, suivant l'axe de propagation (X) et dans le sens opposé à celui de la propagation du faisceau de particules (88).

12. Dispositif selon l'une quelconque des revendications 1 à 11, dans lequel la cible de spallation a un axe de symétrie de révolution qui est confondu avec l'axe de propagation (X).

13. Dispositif selon l'une quelconque des revendications 1 à 12, dans lequel la paroi étanche (92) est convexe et sa convexité est tournée vers l'intérieur de la première enceinte.

14. Dispositif selon l'une quelconque des revendications 1 à 13, dans lequel la paroi étanche a un axe de symétrie de révolution qui est confondu avec l'axe de propagation (X).

15. Dispositif selon l'une quelconque des revendications 1 à 14, comprenant en outre, dans la première enceinte, des moyens (96) de guidage du fluide caloporteur au moins en direction de la paroi étanche (92).

## Claims

1. Spallation device for the production of neutrons, this device comprising:
- a spallation target (63, 78) that will produce neutrons by interaction with a particle beam (64, 88),
- a first chamber (84) containing the spallation target,
- means (30) of generating the particle beam,
- a second chamber (86) in which the particle beam will propagate towards the spallation target, along a line of propagation (X),
- a leak tight partition (74, 92) through which the particle beam can pass, separates the first chamber from the second chamber and reaches this propagation axis, and
- a heat transporting fluid (78, 95) intended to circulate in the first chamber to cool the spallation target,
this device being **characterized in that** the particle beam (64, 88) is hollow and surrounds the propagation axis (X).

2. Device according to claim 1,. in which the particles are chosen from the group comprising protons, deuterium nuclei, tritium nuclei, helium 3 nuclei and helium 4 nuclei.

3. Device according to either of claims 1 and 2, in which the radial distribution of the current density in the particle beam is approximately gaussian and is offset from the axis of symmetry of the beam.

4. Device according to any one of claims 1 to 3, in which the generation means are designed to produce the hollow particle beam themselves.

5. Device according to any one of claims 1 to 3, in which the generation means (30) are designed to produce the hollow particle beam from a solid particle beam (26).

6. Device according to any one of claims 1 to 5, in which the spallation target (63) is solid.

7. Device according to claim 6, in which the spallation target (63) comprises several successive elementary targets (62), each elementary target comprising a conical plate provided with a central drilling (65).

8. Device according to either of claims 6 and 7, in which a space is provided between the leak tight partition (92) and the spallation target (63) for circulation of the heat transporting fluid (95).

9. Device according to any one of claims 1 to 5, in which the spallation target (78) is liquid and forms the heat transporting fluid.

10. Device according to claim 9, in which the spallation target (78) moves in the first chamber along the axis of propagation (X) and in the direction of propagation of the particle beam (88).

11. Device according to claim 9, in which the spallation target (78) moves within the first chamber along the propagation axis (X) and in the direction opposite to the direction of propagation of the particle beam (88).

12. Device according to any one of claims 1 to 11, in which the spallation target has an axis of symmetry of revolution that is coincident with the propagation axis (X).

13. Device according to any one of claims 1 to 12, in which the leak tight partition (92) is convex towards the inside of the first chamber.

14. Device according to any one of claims 1. to 13, in which the leak tight partition has an axis of symmetry of revolution coincident with the propagation axis (X).

15. Device according to any one of claims 1 to 14, also comprising means (96) of guidance of the heat transporting fluid at least towards the leak tight partition (92), in the first chamber.

## Patentansprüche

1. Spallationsvorrichtung zur Neutronenerzeugung, umfassend:
- ein Spallations-Target (63, 78), bestimmt zur Erzeugung der Neutronen durch Wechselwirkung mit einem Teilchenstrahl (64, 88),
- einen ersten, das Spallations-Target enthaltenden Behälter (84),
- Einrichtungen (30) zur Erzeugung des Teilchenstrahls,
- einen zweiten Behälter (86), welcher der Ausbreitung bzw. Fortpflanzung des Teilchenstrahls entsprechend einer Fortpflanzungsachse (X) in Richtung Spallations-Target dient,
- eine dichte Wand (74, 92), durchlässig für den Teilchenstrahl, die den ersten Behälter von dem zweiten Behälter trennt und diese Fortpflanzungsachse schneidet, und
- ein Kühlmittelfluid (78, 96), das in dem ersten Behälter zirkuliert, um das Spallations-Target zu kühlen,
wobei diese Vorrichtung **dadurch gekennzeichnet ist, dass** der Teilchenstrahl (64, 88) hohl ist und die Fortpflanzungsachse (X) umschließt.

2. Vorrichtung nach Anspruch 1, bei der die Teilchen aus der Gruppe ausgewählt werden, welche die Protonen, die Deuteriumkerne, die Tritiumkerne, die Helium-III-Kerne und die Helium-IV-Kerne umfasst.

3. Vorrichtung nach einem der Ansprüche 1 und 2, bei der die radiale Verteilung der Stromdichte in dem Teilchenstrahl im Wesentlichen dem Gaußschen Typ entspricht und außerhalb der Symmetrieachse des Strahls zentriert ist.

4. Vorrichtung nach einem der Ansprüche 1 bis 3, bei der die Erzeugungseinrichtungen vorgesehen sind, um selbst den hohlen Teilchenstrahl zu erzeugen.

5. Vorrichtung nach einem der Ansprüche 1 bis 3, bei der die Erzeugungseinrichtungen (30) vorgesehen sind, um den hohlen Teilchenstrahl aus einem vollen Teilchenstrahl (26) zu erzeugen.

6. Vorrichtung nach einem der Ansprüche 1 bis 5, bei der das Spallations-Target (63) ein fester Körper ist.

7. Vorrichtung nach Anspruch 6, bei der das Spallations-Target (63) eine Vielzahl sukzessiver elementarer Targets (62) umfasst, wobei jedes elementare Target eine mit einer zentralen Bohrung (65) versehene konische Platte umfasst.

8. Vorrichtung nach einem der Ansprüche 6 und 7. bei der zwischen der dichten Wand (92) und dem Spallations-Target (63) ein Raum für die Zirkulation des Kühlmittelfuids (95) vorgesehen ist.

9. Vorrichtung nach einem der Ansprüche 1 bis 5, bei der das Spallations-Target (78) flüssig ist und durch das Kühlmittelfluid gebildet wird.

10. Vorrichtung nach Anspruch 9, bei der das Spallations-Target (78) sich in dem ersten Behälter entsprechend der Fortpflanzungsachse (X) und in der Richtung der Fortpflanzung des Teilchenstrahls (88) verschiebt.

11. Vorrichtung nach Anspruch 9, bei der das Spallations-Target (78) sich in dem ersten Behälter entsprechend der Fortpflanzungsachse (X) und in der zur der Fortpflanzung des Teilchenstrahls (88) entgegengesetzten Richtung verschiebt.

12. Vorrichtung nach einem der Ansprüche 1 bis 11, bei der das Spallations-Target eine Rotationssymmetrieachse hat, die zusammenfällt mit der Fortpflanzungsachse (X).

13. Vorrichtung nach einem der Ansprüche 1 bis 12, bei der die dichte Wand (92) konvex ist und ihre Konvexität dabei der Innenseite des ersten Behälters zugewandt ist

14. Vorrichtung nach einem der Ansprüche 1 bis 13, bei der die dichte Wand eine Rotationssymmetrieachse hat, die mit der Fortpflanzungsachse (X) zusammenfällt.

15. Vorrichtung nach einem der Ansprüche 1 bis 14, die außerdem in dem ersten Behälter Leiteinrichtungen (96) des Kühlmittelfluid wenigstens in Richtung der dichten Wand (92) umfasst.
